# EUROPEAN PATENT SPECIFICATION

(11) **EP 3 536 918 B1**
(45) Date of publication and mention of the grant of the patent: **29.12.2021**
(21) Application number: 19161749.7
(22) Date of filing: 08.03.2019
(51) Int. Cl.: F01M 5/02, F02N 11/08, F02N 19/00, F01M 1/02, F01M 5/00, F02D 41/00, F16N 13/06, F01M 1/12

(54) **MANAGEMENT METHOD OF AN INTERNAL COMBUSTION ENGINE LUBRICATION AND INTERNAL COMBUSTION ENGINE IMPLEMENTING THE METHOD**
VERFAHREN ZUR STEUERUNG EINER SCHMIERUNG EINES VERBRENNUNGSMOTORS UND VERBRENNUNGSMOTOR MIT IMPLEMENTIERUNG DES VERFAHRENS
PROCÉDÉ DE GESTION DE SYSTÈME DE LUBRIFICATION D'UN MOTEUR À COMBUSTION INTERNE ET MOTEUR À COMBUSTION INTERNE METTANT EN OEUVRE LE PROCÉDÉ

(30) Priority: 09.03.2018 IT 201800003414
(43) Date of publication of application: 11.09.2019
(73) Proprietor: FPT Motorenforschung AG, 9320 Arbon (CH)
(72) Inventor: BORG, Jonathan, 9008 ST. GALLEN (CH); GSTREIN, Wolfgang, 6900 BREGENZ (AT)
(74) Representative: Bongiovanni, Simone

(56) References cited:
- EP-A1- 0 962 631
- EP-A1- 3 150 811
- WO-A1-2017/089569
- DE-A1- 3 929 078
- DE-A1- 10 035 049
- FR-A1- 3 002 974
- US-A1- 2003 041 829
- US-A1- 2006 102 125
- US-A1- 2010 288 570

## Description

### Field of the invention

The present invention relates to improvements relating the lubrication of internal combustion engines when provided of Stop and Start technology, in particular in the field of industrial vehicles.

### Description of the prior art

It is well known that the engine lubrication system has two different tasks: to cool certain components, to lubricate other components and to lubricate and cool further components. Therefore, in spite of the name "lubrication system", it develops also a cooling task in parallel with a lubrication task.

The turbine bearings exploit both the lubrication and cooling effects.

The engine lubrication system comprises a hydraulic circuit coupled with a pump pressurizing the hydraulic circuit with oil sucked from an oil sump where the oil falls after development of the above mentioned tasks.

The most critical situation is at engine start, because the bearings are not lubricated. Thus, those vehicles provided of Stop&Start systems are stressed in term of lubrication, due to frequent engine start events. US2010/288570 A1 and DE10035049 A1 disclose examples of methods to lubricate the engine of a vehicle equipped with a stop & start system.

Industrial vehicles, due to their large displacement engines with big inertia, require huge energy amount to lubricate bearings. Therefore, in such a case, the problems in connection with a correct lubrication are amplified.

### Summary of the invention

The main object of the present invention is to improve the lubrication of an internal combustion engine.

It is proposed to use the vehicle driver assist system hardware to predict a forthcoming engine load request while the engine has been stopped in a vehicle equipped with Start-Stop system. If an up-coming engine start is predicted, an electrical oil pump is triggered to prime the engine oil system such that oil has already been delivered to the bearings during the engine hot-start.

In contrast with FR3002974, the engine start is not postponed as long as the lubricating circuit is ready. According to the present invention, the start prediction aims to anticipate the oil pump activation such that to be ready at the engine start triggering.

In addition, according to the present invention, the oil pump is switched off when the engine is switched off, and is switched on just in time to be ready at the engine start triggering. Indeed an excessive anticipation of the oil pump start lead to an undue electric energy consumption. Advantageously, an earlier delivery of oil can reduce the amount of time where the bearings and crankshaft are in metal-to-metal contact, for improved bearing life-time.

The idea would also be attractive for engines equipped with hydraulically-actuated variable-valve actuation systems, to enable WA operation even during engine start, avoiding delays due to oil-filling.

According to a preferred embodiment of the invention, prediction of an upcoming load request can be based on a vehicle camera arranged to detect a change in the traffic lights from red to green; similarly, an upcoming load request can be based on a vehicle radar (or Lidar) system arranged to detect motion of the vehicle in front, when the vehicle provided with the present system is queuing.

A release of the vehicle brake pedal can also be used at a cross road, before the acceleration pedal is pressed. If any of these conditions are met while the engine is in Stop condition, the electrical oil pump is started.

According to the invention, a drive assist system is implemented and configured to predict a forthcoming vehicle start, to improve the system responsiveness for engine start.

The drive assist systems also called "Advanced driver-assistance systems", or ADAS, are systems to help the driver in the driving process. They are designed to increase car safety and more generally road safety.

A drive assist system consists of hardware comprising radar and/or optical sensors and interfaces to several vehicle inputs, such as signals from driver's pedals/levers and on-board cameras. In some cases, the drive assist system has also an interface towards the cartographic navigation system of the vehicle.

"Pedals" refer generically to the accelerator, brake, and clutch pedals. "Levers" refer generically to the gear lever, to the turn lights lever and so on.

The drive assist system hardware is programmed to collect and elaborate the signals received by said several sensors/interfaces in order to complement or supersede driver commands for increasing vehicle safety.

The drive assist system is capable to detect the service brake release. The service brake release as such does not have a relevant significance, but a service brake release at a cross-roads is a clear sign of forthcoming engine start.

According to another preferred embodiment of the invention, the drive assist system can recognize the traffic lights or STOP signals or queueing condition to prepare the engine.

According to another preferred implementation of the present invention, which can be combined with the previous embodiment, the oil pump is activated while engine is in Stop condition and stopped just before electric starter or BRM machine is started to crank the internal combustion engine. This strategy is advantageous because it exploits the slower oil circuit dynamic in respect of the electric flows driving first the oil pump and then the engine starter.

"Just before" or "just in time" means that if the oil circuit pressurization needs 2 seconds, the oil pumps is switched on 2 - 3 seconds before engine start triggering. The 1 second anticipation, as a guard threshold, is preferred to be sure that the oil circuit is correctly efficient at the time of the engine start triggering.

Nevertheless, the guard threshold can be selected according to the balance of probabilities and can be range between some tenths of a second to a few seconds, by bearing in mind that electric energy consumption should be limited.

In this context, it is preferred that the electric oil pump is designed to prevent oil to return in the oil sump through the pump itself. Alternatively, a check valve is interposed between the main gallery and the electric oil pump. Nevertheless, further locations can be foreseen.

Thanks to this implementation of the invention, the integration of BRM for engine hot-start also in high compression ratio combustion engine is permitted.

With "High compression ratio engine" is meant an engine with a compression ratio higher than 15:1.

According to another preferred implementation of the invention that can be combined with the previous ones, the engine lubrication system is divided mainly into two branches: one first branch directed to the piston oil jet, arranged under the piston skirt to cool the piston, one second branch directed to the bearings for lubrication thereof and to the valve actuation system, for lubrication and pressurization thereof.

Valve means are arranged on the first branch. An example of such a scheme is given in EP3150811. Here, the valve means are arranged to throttle or shut-off the first branch in order to increase the oil pressure in the main gallery to lubricate bearings and pressurize valve actuation means before engine start.

Advantageously, not only the bearings are lubricated before their operation, but the valve actuation can be operated before the engine cranking to decompress the cylinder. In other words crank torque is temporarily reduced, by avoiding compression stroke or reducing the mass of trapped gas in the cylinder(s) during engine compression stroke, to enable engine start with a starter or a BRM.

One possibility would be to utilize the variable valve actuation system or to adjust exhaust valve decompression system, typically used for engine brake, to limit the compression pressure.

Therefore, according to a preferred embodiment of the invention, the engine compression pressure is reduced temporarily to reduce the engine cranking torque.

The engine normal operation is restored when the engine speed exceeds a predetermined rotation speed, for example 500 rpm such that engine start can be performed.

Often the variable valve actuation WA and/or the engine brake system EBS are actuated by means of engine oil pressurized by an oil pump.

It is clear that when the engine is off said systems VVA/EBS typically cannot be actuated, thus according to an embodiment of the invention, the ADAS is exploited to recognize a forthcoming engine stop to actuate oil pump and such WA and/or EBS systems such that to reduce the above engine cranking torque at the following engine start. The WA and/or EBS systems need to be actuated during engine shut-down, while oil pressure is still available, immediately after injection has been shut-off.

A possible operating sequence can be
- Engine switching off,
- Oil pump deactivation,
- Engine start triggering foreseeing
- Oil pump activation,
- VVA switching/EBS actuation
- Optional oil pump deactivation
- Engine start
- restoring VVA or ending EBS when engine speed exceed a predetermined threshold and restarting oil pump if deactivated just before engine start.

These and further objects are achieved by means of the attached claims, which describe preferred embodiments of the invention, forming an integral part of the present description.

### Brief description of the drawings

The invention will become fully clear from the following detailed description, given by way of a mere exemplifying and non limiting example, to be read with reference to the attached drawing figures, wherein:
- Fig. 1 shows schematically a vehicle provided with a system programmed according to the present invention;
- Fig. 2 shows a detail of a portion of figure 1;
- Fig. 3 shows another embodiment of the detail of figure 2.

Dashed lines indicates electrical lines for interoperation of electric/electronic devices.

The same reference numerals and letters in the figures designate the same or functionally equivalent parts. According to the present invention, the term "second element" does not imply the presence of a "first element", first, second, etc. are used only for improving the clarity of the description and they should not be interpreted in a limiting way.

### Detailed description of the preferred embodiments

Advanced driver-assist systems (ADAS) are systems developed to automate/adapt/enhance vehicle systems for safety and better driving. Safety features are designed to avoid collisions and accidents by offering technologies that alert the driver to potential problems, or to avoid collisions by implementing safeguards and taking over control of the vehicle VH. Adaptive features may automate lighting, provide adaptive cruise control, automate braking, incorporate GPS, traffic warnings, connect to smartphones, alert driver to other cars or dangers, keep the driver in the correct lane, or show what is in blind spots.

ADAS relies on inputs from multiple data sources, including automotive imaging, LiDAR, radar, image processing, computer vision, and in-car networking. Additional inputs are possible from other sources separate from the primary vehicle platform, such as other vehicles, referred to as Vehicle-to-vehicle (V2V), or Vehicle-to-Infrastructure (such as mobile telephony or wifi data network) systems.

A good definition of ADAS is given in http://www.autoconnectedcar.com/adas-advanced-driverassistance-sytems-definition-auto-connected-car/.

According to the present invention, the electric oil pump is activated before engine crank to provide the engine with an optimal bearing lubrication.

According to an embodiment of the present invention, the ADAS capability is implemented to predict a forthcoming engine start and to command the oil pump activation.

Preferably, ADAS is capable to recognize traffic lights, thanks to a camera CM oriented according to the vehicle normal travelling direction, by recognizing green, yellow and possibly red lights.

ADAS is also capable to acquire other signals such as signals from Stop&Start system commanding engine stop and start.

ADAS is capable to acquire the conditions of the driver interface, namely pedals and levels.

The ADAS comprises a dedicated control unit interoperating or coinciding with the VMU (Vehicle control unit).

As known, the Vehicle control unit receives all the input coming from the driving pedal sensors PS and from the sensors arranged along with the ATS, including the temperature sensor, lambda sensors, NOx sensors and so on.

For example, the present method can be implemented directly in the ADAS system or in the VMU when they are separated control units.

An internal combustion engine comprises a piston reciprocated with a respective cylinder. The piston is connected, as known, to a crankshaft supported by bearings. Such engines comprise at least four strokes including a compression stroke where air is compressed. Fuel is added and either due to pressure or spark plug ignition, such mixture explodes.

The internal combustion engine further comprises an oil circuit where oil is pumped by means of an electric pump. According to a preferred embodiment of the present invention, the start management of an internal combustion engine E is carried out synergistically with said drive assist system by temporarily reducing said engine resistive torque to facilitate engine rotation when said drive assist system foresees a forthcoming engine start.

The contribution of the ADAS is relevant when the vehicle is provided of the Stop & Start system, which causes the engine switching off according to certain predetermined conditions, for example, when the gear shift is in neutral, clutch pedal released and service brake pedal depressed. And causes a following engine start for example when depressing of the clutch pedal and/or the release of a service brake is detected and/or when a green light of cross light is detected and/or the departing of a preceding vehicle is detected.

Before engine start, the latter is prepared to facilitate its rotation, thus oil pump is activated in order to provide the engine oil consumers of an amount of oil.

An earlier delivery of oil can reduce the amount of time where the bearings and crankshaft are in metal-to-metal contact, for improved bearing life-time.

The idea would also be attractive for engines equipped with hydraulically-actuated variable-valve actuation systems, to enable VVA operation even during engine start, avoiding oil-filling delays.

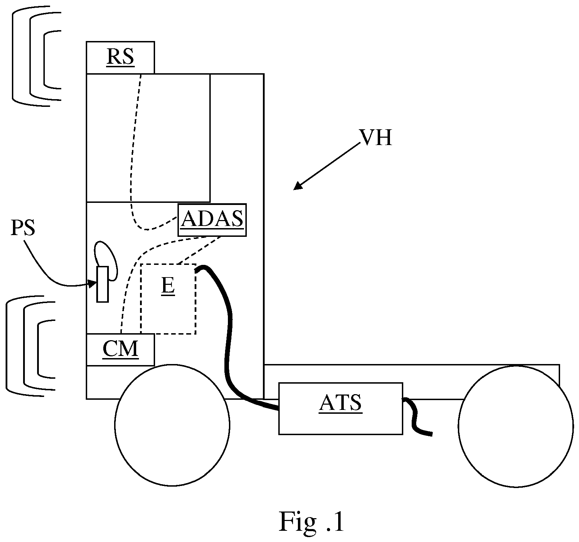

Figure 1 discloses a vehicle VH provided with an internal combustion engine E with an ATS to treat the pollutants contained in the exhaust gas produced by the internal combustion engine.

The vehicle further comprises the above ADAS which monitors several conditions, through relating electric signals, including pedals and levers PS, cameras CM, radars RS and the internal combustion engine E itself.

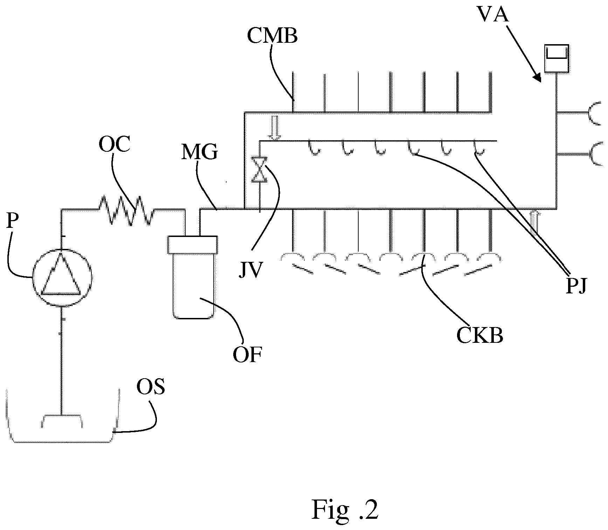

Figure 2 discloses schematically an embodiment of an engine oil circuit including an electric pump P sucking oil from an oil sump OS. Then oil is cooled and filtered through respectively a cooler OC and filter OF.

From the main gallery MG, oil is diverted towards engine piston jets PJ, crankshaft CKB and camshaft bearings CMB, and valve actuators VA.

Preferably, a valve JV is arranged on the branch of the oil circuit feeding the piston jets PJ.

ADAS can be arranged to cause the electric pump activation and is arranged to command said valve JV to throttle such that oil pressure raises quickly for the valve actuators to rapidly prepare the engine to the forthcoming start. According to the scheme of figure 2, just one pump is implemented. Thus, the same pump is arranged to supply the entire oil circuit.

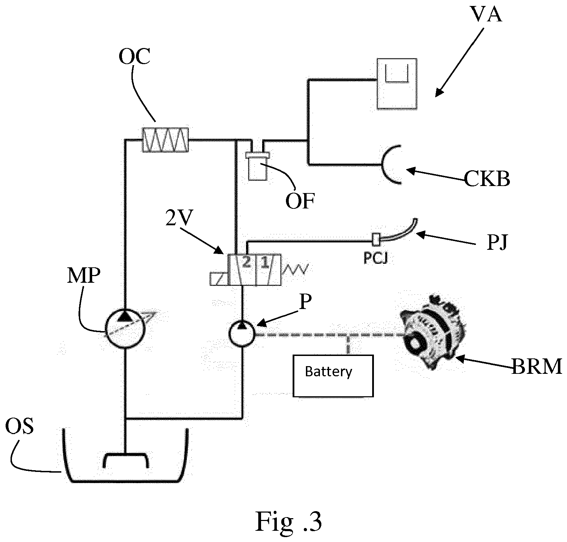

Figure 3 discloses another preferred implementation of the present invention. According to this embodiment, two oil pumps are implemented: a main pump MP driven by the engine, thus a traditional pump and an electric pump P. The main pump can have a fixed or variable flow. Figure 3 discloses a dashed arrow over the pump to indicate that the oil flow is controllable.

The main pump supplies the second oil circuit branch of the oil circuit, according to the above subdivision. Thus, the main pump supply the entire oil circuit with the exclusion of the oil jets PJ and possibly some further oil consumers. The electric pump P is arranged to normally supply the oil jets PJ and possibly said some further oil consumers, namely the first oil circuit branch.

A 2-way valve 2V is arranged to connect the electric pump selectively with the first or the second oil circuit branch.

In particular, before engine hot start, the 2-way valve connects the electric pump P with the second branch and after engine cranking the 2-way valve switches in the opposite configuration connecting the electric pump P with the first branch.

This configuration appears to be really advantageous, because at cold start, the valve 2V can be maintained in normal condition, namely connecting second branch with the main pump MP and first branch with the electric pump P. Indeed, at cold start, the electric pump should be really powerful to pressurize the second branch with an increased oil viscosity.

Thanks to the present invention, the internal combustion engine can be provided with a BRM Boost recuperation machine because the overall frictions are reduced. According to a preferred embodiment of the invention, the oil pump is switched off just before activation engine starter to direct all the available electric energy to the starter.

Then, immediately after engine start, the oil pump is switched on and maintained on at least until a next engine Stop.

Should the circuit provided of said valve JV, the latter is opened to cool piston(s).

When a BRM is implemented, it is arranged to support energy-saving features, such as combustion engine supplementation, switching off the internal combustion engine by driving all the relevant consumers, while the vehicle coasts in zero-emission, etc.

Therefore, the BRM includes said electric motor, a DC/DC converter and a high-power battery to store energy and supply the electric motor and the electric pump P.

The internal combustion engine, thanks to the present invention can have high compression-ratio, coupled with a single medium-high voltage winding electric motor-generator defining said BRM, namely lacking a low-voltage starter or a low voltage winding. The latter can still be integrated to cater for extremely cold-start conditions.

Often internal combustion engines are provided with variable valve actuation VVA to vary the timing and the effective displacement of the inlet and/or exhaust cylinder valves.

The reduction of volumetric efficiency of an engine is known with Atkinson and Miller cycles.

According to an exemplary embodiment of the invention, that can be combined with any of the above ones, the engine volumetric efficiency is worsened well beyond the scope of the Atkinson and Miller cycles, in order to reduce the resistive torque offered by the engine during cranking operating on the inlet and/or exhaust valves.

Other engines are provided with engine brake device, suitable to open the exhaust valve at or before the top dead center to suddenly release compressed air. According to another embodiment of the invention, the exhaust valve is opened before top dead center in order to reduce compression of the air previously introduced in the sucking stroke.

In both the examples, the aim is to minimize negative work consumed to compress air, which requires high torque from the engine starter. For this reason, the valve actuators to realize "special" Miller/Atkinson cycles or "special" engine brake are here named as "decompressing means".

Said decompressing means are typically actuated through engine oil pressure.

Due to the fact that, according to the present invention the oil pump is activated before engine Start, the VVA can be supplied in order to actuate an engine decompression to facilitate engine start.

Should the electric pump be switched off to empower the engine starter or the BRM, the VVA system is not affected by a temporary oil pressure decrease, because VVA systems need oil pressure essentially during transients.

However, it is favorable to shape the oil pump such that the oil cannot come back to the oil sump through the oil pump. Alternatively, a check valve (not shown) is arranged at the output pf the oil pump.

This invention can be implemented advantageously in a computer program comprising program code means for performing one or more steps of such method, when such program is run on a computer. For this reason, the patent shall also cover such computer program and the computer-readable medium that comprises a recorded message, such computer-readable medium comprising the program code means for performing one or more steps of such method, when such program is run on a computer.

Many changes, modifications, variations and other uses and applications of the subject invention will become apparent to those skilled in the art after considering the specification and the accompanying drawings which disclose preferred embodiments thereof as described in the appended claims.

The features disclosed in the prior art background are introduced only in order to better understand the invention and not as a declaration about the existence of known prior art. In addition, said features define the context of the present invention, thus such features shall be considered in common with the detailed description.

Further implementation details will not be described, as the man skilled in the art is able to carry out the invention starting from the teaching of the above description.

## Claims

1. Management method of lubrication of an internal combustion engine in a vehicle provided with a Stop & Start system, the method comprising:
- an engine stop and a following engine start, caused by said Stop & Start system;
- a step of automatically foreseeing the forthcoming engine start of said Stop & Start system, and
- a consequent electric oil pump activation before said engine start, such that a lubricating oil circuit is efficient just before engine start triggering;
wherein a drive assist system (ADAS) is implemented, capable to interact with at least said internal combustion engine,
wherein said step of automatically foreseeing said forthcoming engine start is carried out by said drive assist system (ADAS).

2. Method according to claim 1, wherein engine start triggering is carried out without postponement, namely irrespective to said lubricating oil circuit efficiency.

3. Method according to any one of claims 1 - 2, further comprising a step, actuated after said electric oil pump activation and before said engine start, to reduce air mass trapped in an engine cylinder to reduce a resistive torque offered by the internal combustion engine by adjusting a variable valve actuation system (WA) and/or an engine brake system (EBS).

4. Method according to claim 3, comprising the following steps in succession:
a. said engine stop and electric oil pump stop,
b. foresight of said forthcoming engine start by said drive assist system (ADAS),
c. activation of said electric oil pump,
d. activation of said variable valve actuation system (WA) and/or said engine brake system (EBS) in order to reduce said engine resistive torque,
e. said engine start.

5. Method according to any one of the previous claims, comprising
- automatically foreseeing said forthcoming engine start by said drive assist system (ADAS),
- a consequent electric oil pump activation,
- a following electric pump deactivation,
- said engine start,
Wherein said electric oil pump deactivation helps to address available energy to an electric starter arranged to start the internal combustion engine.

6. Method according to any one of previous claims, wherein before said engine start, a first oil branch of the internal combustion engine supplying oil to an internal combustion engine piston(s) is throttled or shut-off in order to increase oil pressure towards a second oil branch, connected with remaining combustion engine oil consumers, such as bearings and valve actuation means.

7. Method according to claim 6, wherein one single electric pump (P) is implemented for supplying oil to both said first and second branch, or wherein a combustion engine driven oil pump (MP) and an electric pump (P) are implemented together through a 2-way valve (2V), such that, + before said engine start, said 2-way valve is arranged to connect said electric pump with said second oil branch, and + after said engine start, said 2-way valve is arranged to connect said engine driven oil pump (MP) with said second oil branch and said electric pump with said first oil branch.

8. Method according to any one of previous claims, wherein said drive assist system (ADAS) is arranged to cause said electric oil pump activation..

9. Method according to claim 1, wherein said forthcoming engine start is foreseen by said drive assist system (ADAS) when the engine is stationary and
- a service brake is released and/or
- a green light of cross light appears.

10. Method according to claim 1, wherein said forthcoming engine start is foreseen by said drive assist system (ADAS) when the engine is operative before said engine stop and a Stop road sign or a yellow or red light of a cross light appears.

11. Vehicle provided with an internal combustion engine (E) and with a stop and start system (S&S) capable to manage stop and start of said internal combustion engine, wherein the internal combustion engine is provided with an electric oil pump and with control means comprising a drive assist system (ADAS) configured to foresee a forthcoming engine start of said stop and start system (S&S), and the control means being configured to consequently activate the electric oil pump before said engine start.

12. Vehicle according to claim 11, wherein said internal combustion engine is further equipped with a decompression means and wherein said control means are configured to automatically temporarily reduce an engine resistive torque to facilitate engine rotation when a forthcoming engine start is detected or foreseen.

13. Vehicle according to claim 11, wherein said drive assist system (ADAS) is arranged to cause the activation of the electric oil pump.

14. Vehicle according to claim 11, wherein said control means comprise a control unit which is programmed to execute the method according to any one of the claims 1 to 10.

15. Vehicle according to any one of previous claims from 11 to 14, provided with a Boost recuperation machine (BRM) arranged to start engine without a low voltage starter.

16. Computer program comprising computer program code means adapted to perform the method of any one of the claims from 1 to 10, when said program is run on a control unit.

17. A computer readable medium having a program recorded thereon, said computer readable medium comprising computer program code means adapted to perform the method of any one of the claims from 1 to 10, when said program is run on a control unit.

## Patentansprüche

1. Managementverfahren zur Schmierung einer Brennkraftmaschine in einem Fahrzeug, das mit einem Stopp/Start-System versehen ist, wobei das Verfahren Folgendes umfasst:
- einen Kraftmaschinenstopp und einen folgenden Kraftmaschinenstart, die durch das Stopp/Start-System bewirkt werden;
- einen Schritt des automatischen Vorhersehens des anstehenden Kraftmaschinenstarts des Stopp/Start-Systems; und
- infolgedessen eine Aktivierung einer elektrischen Ölpumpe vor dem Kraftmaschinenstart, derart, dass ein Schmierölkreislauf unmittelbar vor dem Auslösen des Kraftmaschinenstarts wirksam ist,
wobei ein Fahrunterstützungssystem (ADAS) implementiert ist, das zumindest mit der Brennkraftmaschine in Wechselwirkung treten kann,
wobei der Schritt des automatischen Vorhersehens des anstehenden Kraftmaschinenstarts durch das Fahrunterstützungssystem (ADAS) ausgeführt wird.

2. Verfahren nach Anspruch 1, wobei das Auslösen des Kraftmaschinenstarts ohne Aufschub, konkret ungeachtet der Wirksamkeit des Schmierölkreislaufs, ausgeführt wird.

3. Verfahren nach einem der Ansprüche 1-2, das ferner einen Schritt umfasst, der nach der Aktivierung der elektrischen Ölpumpe und vor dem Kraftmaschinenstart getätigt wird, um eine in einem Kraftmaschinenzylinder eingeschlossene Luftmasse zu verringern, um ein Gegendrehmoment zu verringern, das durch die Brennkraftmaschine aufgebracht wird, indem ein System zur Betätigung eines variablen Ventils (VVA) und/oder ein Kraftmaschinenbremssystem (EBS) eingestellt werden.

4. Verfahren nach Anspruch 3, das nacheinander die folgenden Schritte umfasst:
a. den Kraftmaschinenstopp und einen Stopp der elektrischen Ölpumpe;
b. Vorhersehen des anstehenden Kraftmaschinenstarts durch das Fahrunterstützungssystem (ADAS);
c. Aktivierung der elektrischen Ölpumpe;
d. Aktivierung des Systems zur Betätigung eines variablen Ventils (VVA) und/oder des Kraftmaschinenbremssystems (EBS), um das Kraftmaschinen-Gegendrehmoment zu verringern;
e. den Kraftmaschinenstart.

5. Verfahren nach einem der vorhergehenden Ansprüche, das Folgendes umfasst:
- automatisches Vorhersehen des anstehenden Kraftmaschinenstarts durch das Fahrunterstützungssystem (ADAS);
- infolgedessen eine Aktivierung der elektrischen Ölpumpe;
- darauffolgend eine Deaktivierung der elektrischen Pumpe;
- den Kraftmaschinenstart,
wobei die Deaktivierung der elektrischen Ölpumpe dabei unterstützt, eine verfügbare Energie einem elektrischen Anlasser zuzuweisen, der ausgelegt ist, die Brennkraftmaschine zu starten.

6. Verfahren nach einem der vorhergehenden Ansprüche, wobei vor dem Kraftmaschinenstart ein erster Ölstrang der Brennkraftmaschine, der einem oder mehreren Kolben der Brennkraftmaschine Öl zuführt, gedrosselt oder ausgeschaltet wird, um einen Öldruck in Richtung eines zweiten Ölstrangs, der mit weiteren Ölverbrauchern der Brennkraftmaschine wie etwa Lagern und Ventilbetätigungsmitteln verbunden ist, zu erhöhen.

7. Verfahren nach Anspruch 6, wobei eine einzige elektrische Pumpe (P) zum Zuführen von Öl sowohl zum ersten als auch zum zweiten Strang implementiert ist oder wobei eine durch die Brennkraftmaschine angetriebene Ölpumpe (MP) und eine elektrische Pumpe (P) durch ein Zweiwegeventil (2V) zusammen implementiert sind, derart, dass
+ vor dem Kraftmaschinenstart das Zweiwegeventil ausgelegt ist, die elektrische Pumpe mit dem zweiten Ölstrang zu verbinden, und
+ nach dem Kraftmaschinenstart das Zweiwegeventil ausgelegt ist, die durch die Kraftmaschine angetriebene Ölpumpe (MP) mit dem zweiten Ölstrang und die elektrische Pumpe mit dem ersten Ölstrang zu verbinden.

8. Verfahren nach einem der vorhergehenden Ansprüche, wobei das Fahrunterstützungssystem (ADAS) ausgelegt ist, die Aktivierung der elektrischen Ölpumpe zu bewirken.

9. Verfahren nach Anspruch 1, wobei der anstehende Kraftmaschinenstart durch das Fahrunterstützungssystem (ADAS) vorhergesehen wird, wenn die Kraftmaschine stillsteht, und
- eine Betriebsbremse gelöst wird, und/oder
- ein grünes Licht einer Lichtzeichenanlage erscheint.

10. Verfahren nach Anspruch 1, wobei der anstehende Kraftmaschinenstart durch das Fahrunterstützungssystem (ADAS) vorhergesehen wird, wenn die Kraftmaschine vor dem Kraftmaschinenstopp in Betrieb gewesen ist und ein Stopp-Verkehrsschild oder ein gelbes oder rotes Licht einer Lichtzeichenanlage erscheint.

11. Fahrzeug, das mit einer Brennkraftmaschine (E) und mit einem Stopp/Start-System (S&S-System), das Stopp und Start der Brennkraftmaschine managen kann, versehen ist, wobei die Brennkraftmaschine mit einer elektrischen Ölpumpe und mit Steuermitteln, die ein Fahrunterstützungssystem (ADAS) umfassen, das konfiguriert ist, einen anstehenden Kraftmaschinenstart des Stopp/Start-Systems (S&S) vorherzusehen, und wobei die Steuermittel konfiguriert sind, infolgedessen die elektrische Ölpumpe vor dem Kraftmaschinenstart zu aktivieren, versehen ist.

12. Fahrzeug nach Anspruch 11, wobei die Brennkraftmaschine ferner mit einem Dekompressionsmittel ausgerüstet ist und wobei die Steuermittel konfiguriert sind, automatisch ein Kraftmaschinen-Gegendrehmoment vorübergehend zu verringern, um die Drehung der Kraftmaschine zu erleichtern, wenn ein anstehender Kraftmaschinenstart detektiert oder vorhergesehen wird.

13. Fahrzeug nach Anspruch 11, wobei das Fahrunterstützungssystem (ADAS) ausgelegt ist, die Aktivierung der elektrischen Ölpumpe zu bewirken.

14. Fahrzeug nach Anspruch 11, wobei die Steuermittel eine Steuereinheit umfassen, die programmiert ist, das Verfahren nach einem der Ansprüche 1 bis 10 auszuführen.

15. Fahrzeug nach einem der vorhergehenden Ansprüche von 11 bis 14, das mit einer Ladedruck-Rückgewinnungsmaschine (BRM) versehen ist, die ausgelegt ist, die Kraftmaschine ohne einen Niederspannungsanlasser zu starten.

16. Computerprogramm, das Computerprogrammcodemittel umfasst, die ausgelegt sind, das Verfahren nach einem der Ansprüche von 1 bis 10 durchzuführen, wenn das Programm auf einer Steuereinheit abläuft.

17. Computerlesbares Medium, auf dem ein Programm aufgezeichnet ist, wobei das computerlesbare Medium Computerprogrammcodemittel umfasst, die ausgelegt sind, das Verfahren nach einem der Ansprüche von 1 bis 10 durchzuführen, wenn das Programm auf einer Steuereinheit abläuft.

## Revendications

1. Méthode de gestion de lubrification d'un moteur à combustion interne dans un véhicule pourvu d'un système d'arrêt et de démarrage, la méthode comprenant :
- un arrêt de moteur et un démarrage de moteur consécutif, provoqués par ledit système d'arrêt et de démarrage ;
- une étape de prévision automatique du prochain démarrage de moteur dudit système d'arrêt et de démarrage, et
- une activation de pompe à huile électrique résultante avant ledit démarrage de moteur, de sorte qu'un circuit d'huile de lubrification est efficace immédiatement avant un déclenchement de démarrage de moteur ;
dans laquelle un système d'aide à la conduite (ADAS) est mis en œuvre, capable d'interagir avec au moins ledit moteur à combustion interne,
dans laquelle ladite étape de prévision automatique dudit prochain démarrage de moteur est réalisée par ledit système d'aide à la conduite (ADAS).

2. Méthode selon la revendication 1, dans laquelle un déclenchement de démarrage de moteur est réalisé sans report, à savoir indépendamment de ladite efficacité de circuit d'huile de lubrification.

3. Méthode selon l'une quelconque des revendications 1 et 2, comprenant en outre une étape, actionnée après ladite activation de pompe à huile électrique et avant ledit démarrage de moteur, pour réduire une masse d'air piégée dans un cylindre de moteur pour réduire un couple résistif fourni par le moteur à combustion interne en ajustant un système d'actionnement de soupape variable (WA) et/ou un système de frein moteur (EBS).

4. Méthode selon la revendication 3, comprenant successivement les étapes suivantes :
a. lesdits arrêt de moteur et arrêt de pompe à huile électrique,
b. la prévision dudit prochain démarrage de moteur par ledit système d'aide à la conduite (ADAS),
c. l'activation de ladite pompe à huile électrique,
d. l'activation dudit système d'actionnement de soupape variable (WA) et/ou dudit système de frein moteur (EBS) afin de réduire ledit couple résistif de moteur,
e. ledit démarrage de moteur.

5. Méthode selon l'une quelconque des revendications précédentes, comprenant
- la prévision automatique dudit prochain démarrage de moteur par ledit système d'aide à la conduite (ADAS),
- une activation de pompe à huile électrique consécutive,
- une désactivation de pompe électrique suivante,
- ledit démarrage de moteur,
dans laquelle ladite désactivation de pompe à huile électrique aide à envoyer de l'énergie disponible à un démarreur électrique agencé pour démarrer le moteur à combustion interne.

6. Méthode selon l'une quelconque des revendications précédentes, dans laquelle avant ledit démarrage de moteur, une première dérivation d'huile du moteur à combustion interne alimentant en huile un/des piston(s) de moteur à combustion interne est étranglée ou coupée afin d'augmenter une pression d'huile vers une seconde dérivation d'huile, reliée à des consommateurs d'huile de moteur de combustion restants, tels que des roulements et moyens d'actionnement de soupape.

7. Méthode selon la revendication 6, dans laquelle une seule pompe électrique (P) est mise en œuvre pour alimenter en huile à la fois lesdites première et seconde dérivations, ou dans laquelle une pompe à huile entraînée par un moteur à combustion (MP) et une pompe électrique (P) sont mises en œuvre conjointement par le biais d'une soupape à deux voies (2V), de sorte que,
+ avant ledit démarrage de moteur, ladite soupape à deux voies est agencée pour relier ladite pompe électrique à ladite seconde dérivation d'huile, et + après ledit démarrage de moteur, ladite soupape à deux voies est agencée pour relier ladite pompe à huile entraînée par moteur (MP) à ladite seconde dérivation d'huile et ladite pompe électrique à ladite première dérivation d'huile.

8. Méthode selon l'une quelconque des revendications précédentes, dans laquelle ledit système d'aide à la conduite (ADAS) est agencé pour entraîner ladite activation de pompe à huile électrique.

9. Méthode selon la revendication 1, dans laquelle ledit prochain démarrage de moteur est prévu par ledit système d'aide à la conduite (ADAS) lorsque le moteur est stationnaire et que
- un frein de service est relâché et/ou
- un feu vert de feu de carrefour apparaît.

10. Méthode selon la revendication 1, dans laquelle ledit prochain démarrage de moteur est prévu par ledit système d'aide à la conduite (ADAS) lorsque le moteur fonctionne avant ledit arrêt de moteur et qu'un panneau routier d'arrêt ou un feu orange ou rouge d'un feu de carrefour apparaît.

11. Véhicule pourvu d'un moteur à combustion interne (E) et d'un système d'arrêt et de démarrage (S&S) capable de gérer l'arrêt et le démarrage dudit moteur à combustion interne, dans lequel le moteur à combustion interne est pourvu d'une pompe à huile électrique et de moyens de commande comprenant un système d'aide à la conduite (ADAS) configuré pour prévoir un prochain démarrage de moteur dudit système d'arrêt et de démarrage (S&S), et les moyens de commande étant configurés pour activer en conséquence la pompe à huile électrique avant ledit démarrage de moteur.

12. Véhicule selon la revendication 11, dans lequel ledit moteur à combustion interne est équipé en outre d'un moyen de décompression et dans lequel lesdits moyens de commande sont configurés pour réduire temporairement de manière automatique un couple résistif de moteur pour faciliter une rotation de moteur lorsqu'un prochain démarrage de moteur est détecté ou prévu.

13. Véhicule selon la revendication 11, dans lequel ledit système d'aide à la conduite (ADAS) est agencé pour entraîner l'activation de la pompe à huile électrique.

14. Véhicule selon la revendication 11, dans lequel lesdits moyens de commande comprennent une unité de commande qui est programmée pour exécuter la méthode selon l'une quelconque des revendications 1 à 10.

15. Véhicule selon l'une quelconque des revendications 11 à 14 précédentes, pourvu d'une machine de récupération de suralimentation (BRM) agencée pour démarrer un moteur sans un démarreur basse tension.

16. Programme informatique comprenant des moyens de code de programme informatique adaptés pour réaliser la méthode selon l'une quelconque des revendications 1 à 10, lorsque ledit programme est exécuté sur une unité de commande.

17. Support lisible par ordinateur ayant un programme enregistré sur celui-ci, ledit support lisible par ordinateur comprenant des moyens de code de programme informatique adaptés pour réaliser la méthode selon l'une quelconque des revendications 1 à 10, lorsque ledit programme est exécuté sur une unité de commande.
